# EUROPEAN PATENT APPLICATION

(11) **EP 3 412 902 A1**
(43) Date of publication of application: **12.12.2018**
(21) Application number: 18177104.9
(22) Date of filing: 11.06.2018
(51) Int. Cl.: F02K 1/08, F02K 1/16, F02K 1/72

(54) **GAS TURBINE WITH MOVEABLE EXHAUST PLUG**

(30) Priority: 09.06.2017 US 201715619029
(71) Applicant: United Technologies Corporation, Farmington, CT 06032 (US)
(72) Inventor: BENT, Andre L., East Hartford, CT Connecticut 06118 (US); ZYSMAN, Steven H., Amston, CT Connecticut 06231 (US); SAWYERS-ABBOTT, Nigel David, South Glastonbury, CT Connecticut 06073 (US)
(74) Representative: Dehns

(57) **Abstract**

An exhaust section (78) of a gas turbine engine includes an exhaust plug (58), and an exhaust nozzle (60) radially offset from the exhaust plug defining an exhaust pathway (80) between the exhaust plug and the exhaust nozzle. The exhaust plug is configured for axial translation relative to exhaust nozzle between a first position and a second position to selectably change a cross-sectional area of the exhaust pathway during thrust reversal operation of the gas turbine engine to reduce an amount of reverse thrust necessary. A method of operating a gas turbine engine includes actuating a fan thrust reverser (68) to divert a fan airflow (70) from a fan airflow pathway, and translating an exhaust plug from a first position to a second position, thereby increasing a cross-sectional area of an exhaust pathway to reduce an amount of reverse thrust necessary.

## Description

### BACKGROUND

Exemplary embodiments pertain to the art of gas turbine engines, and more particularly to exhaust nozzles of gas turbine engines.

Large aircraft, such as multiengine aircraft utilizing high bypass gas turbine engines, utilize fan thrust reversers to slow and stop the aircraft upon landing or in other instances, such as an aborted takeoff. The gas turbine engine is spooled up to increase power output to provide the thrust utilized by the fan thrust reverser, a forward component of thrust, or core thrust, is still provided, via the core of the gas turbine engine, and as thrust is increased to power the fan thrust reverser, the core thrust proportionally increases as well.

It is desired to reduce the size and weight of fan thrust reversers to reduce initial cost and also operating costs of the aircraft. Since to slow and stop the aircraft as desired the fan thrust reverser must overcome the forward momentum of the aircraft as well as the core thrust, lowering the core thrust component that must be overcome by the fan thrust reverser may lead to a reduction in fan thrust reverser size and/or weight.

### BRIEF DESCRIPTION

In one embodiment, an exhaust section of a gas turbine engine includes an exhaust plug, and an exhaust nozzle radially offset from the exhaust plug defining an exhaust pathway between the exhaust plug and the exhaust nozzle. The exhaust plug is configured for axial translation relative to exhaust nozzle between a first position and a second position to selectably change a cross-sectional area of the exhaust pathway during thrust reversal operation to reduce an amount of reverse thrust necessary.

Additionally or alternatively, in this or other embodiments the exhaust plug includes an end portion tapering to a plug tip.

Additionally or alternatively, in this or other embodiments the end portion is conical.

Additionally or alternatively, in this or other embodiments an axially-extending portion of the exhaust plug extends from the end portion.

Additionally or alternatively, in this or other embodiments the axially-extending portion is cylindrical.

Additionally or alternatively, in this or other embodiments a plurality of actuators drive axial translation of the exhaust plug.

Additionally or alternatively, in this or other embodiments the plurality of actuators are a plurality of pneumatic or electric actuators.

Additionally or alternatively, in this or other embodiments translation of the exhaust plug between the first position and the second position changes the cross-sectional area of the exhaust pathway by between 10% and 20%.

In another embodiment, a gas turbine engine includes a fan section defining a fan airflow pathway, a combustor section, a turbine section in fluid communication with the combustor section, and an exhaust section in fluid communication with the turbine section. The exhaust section includes an exhaust plug and an exhaust nozzle radially offset from the exhaust plug defining an exhaust pathway between the exhaust plug and the exhaust nozzle. The exhaust plug is configured for axial translation relative to exhaust nozzle between a first position and a second position to selectably change a cross-sectional area of the exhaust pathway during thrust reversal operation to reduce an amount of reverse thrust necessary.

Additionally or alternatively, in this or other embodiments the exhaust plug includes an end portion tapering to a plug tip.

Additionally or alternatively, in this or other embodiments the end portion is conical.

Additionally or alternatively, in this or other embodiments an axially-extending portion of the exhaust plug extends from the end portion.

Additionally or alternatively, in this or other embodiments the axially-extending portion is cylindrical.

Additionally or alternatively, in this or other embodiments a plurality of actuators drive axial translation of the exhaust plug.

Additionally or alternatively, in this or other embodiments the plurality of actuators are a plurality of pneumatic or electric actuators.

Additionally or alternatively, in this or other embodiments translation of the exhaust plug between the first position and the second position changes the cross-sectional area of the exhaust pathway by between 10% and 20%.

In another embodiment, a method of operating a gas turbine engine includes actuating a fan thrust reverser to divert a fan airflow from a fan airflow pathway, and translating an exhaust plug from a first position to a second position, thereby increasing a cross-sectional area of an exhaust pathway to reduce an amount of reverse thrust necessary.

Additionally or alternatively, in this or other embodiments increasing the cross-sectional area of the exhaust pathway reduces a core thrust produced by the gas turbine engine.

Additionally or alternatively, in this or other embodiments an aircraft is slowed or stopped via the actuating the fan thrust reverser and translating the exhaust plug.

Additionally or alternatively, in this or other embodiments translating the exhaust plug from the first position to the second position increases the cross-sectional area of the exhaust pathway between 10% and 20%.

### BRIEF DESCRIPTION OF THE DRAWINGS

The following descriptions should not be considered limiting in any way. With reference to the accompanying drawings, like elements are numbered alike:
FIG. 1 is a cross-sectional view of an embodiment of a gas turbine engine;
FIG. 2 is an exploded view of an embodiment of a gas turbine engine system;
FIG. 3 is a perspective view of an embodiment of an exhaust section of a gas turbine engine;
FIG. 4 is a first cross-sectional view of an embodiment of an exhaust section of a gas turbine engine;
FIG. 5 is a second cross-sectional view of an embodiment of an exhaust section of a gas turbine engine; and
FIG. 6 is a schematic view of a method of operating a gas turbine engine.

### DETAILED DESCRIPTION

A detailed description of one or more embodiments of the disclosed apparatus and method are presented herein by way of exemplification and not limitation with reference to the Figures.

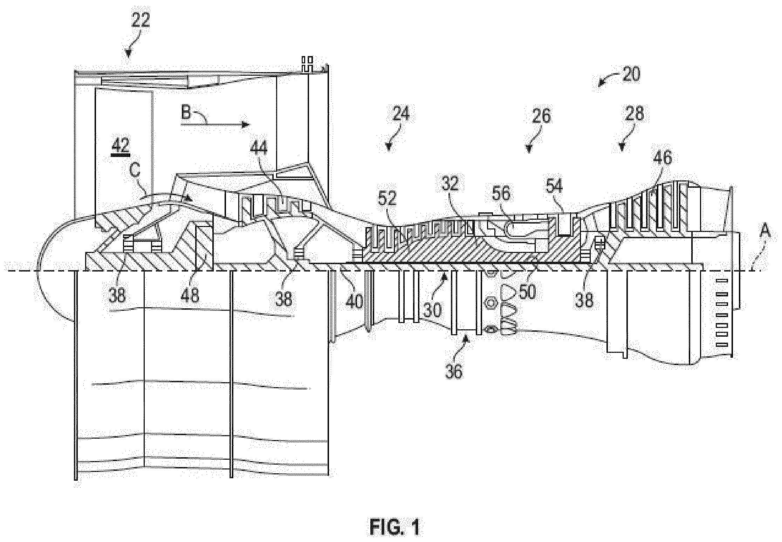

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

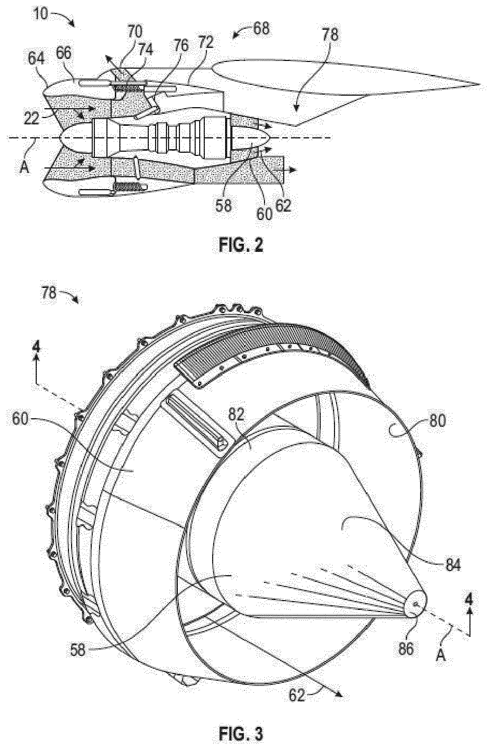

Referring now to FIG. 2, in some embodiments the gas turbine engine 10 includes an exhaust plug 58 and an exhaust nozzle 60 defining a pathway for the exhaust of combusted core airflow, or core thrust 62. Further, the gas turbine engine 10 includes an inlet 64 and a fan cowl 66 to enclose the fan section 22. A fan thrust reverser 68 is included at the gas turbine engine 10 to divert fan airflow 70 radially outwardly and forward during a landing event of an aircraft on which the gas turbine engine 10 is utilized to slow and or stop forward motion of the aircraft. This is achieved by moving a translating sleeve 72 of the fan thrust reverser 68 rearward, which exposes cascade vanes 74, as shown in an upper portion of FIG. 2, while a lower portion of FIG. 2 illustrates the translating sleeve 72 in a stowed position. When the translating sleeve 72 is moved rearward, blocker door assemblies 76 are extend across fan flowpath B, thus diverting the fan airflow 70 outwardly and in an upstream direction through the cascade vanes 74. To slow the aircraft, the diverted fan airflow 70 must overcome not only the forward momentum of the aircraft, but also the core thrust 62.

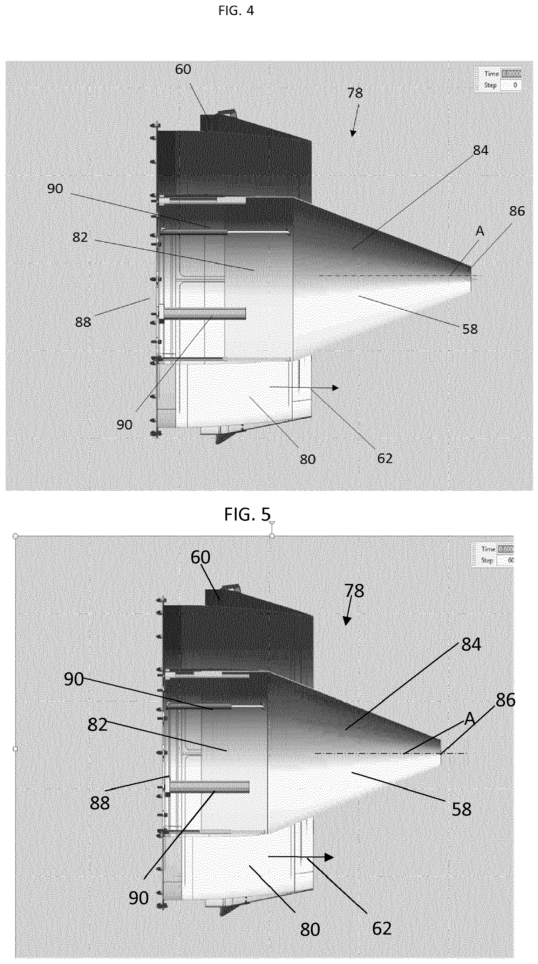

Referring now to FIGs 3 and 4, illustrated is an embodiment of an exhaust section 78 of the gas turbine engine 20, including the exhaust plug 58 located at the engine central longitudinal axis A, and an exhaust nozzle 60. The exhaust nozzle 60 surrounds the exhaust plug 58 and is offset from the exhaust plug 58 in a radial direction to define an exhaust pathway 80 between the exhaust plug 58 and the exhaust nozzle 60 through which core thrust 62 is flowed before exiting to the atmosphere. To reduce the amount of core thrust 62 relative to the fan airflow 70 during a landing operation, a cross-sectional area of the exhaust pathway 80 is increased. This increases an expansion ratio across the turbine section 28, thus resulting in a lower a discharge velocity and thus core thrust 62 relative to the fan airflow 70.

The exhaust plug 58 has an axially-extending portion 82, which in some embodiments is substantially cylindrical, and an end portion 84 extending from the axially-extending portion 82. In some embodiments, the end portion 84 tapers to a plug tip 86 defining a downstream end of the exhaust plug 58. In some embodiments the end portion 84 is conical in shape.

The exhaust plug 58 is movable along the engine central longitudinal axis A relative to the exhaust nozzle 60, between a first position shown in FIG. 4 and a second position, shown in FIG. 5. Moving the exhaust plug 58 from the first position to the second position increases a cross-sectional area of the exhaust pathway 80. The increase of the cross-sectional area of the exhaust pathway 80 increases the expansion ratio across the turbine section 28, thus resulting in a lower amount of core thrust 62 relative to the fan airflow 70.

In some embodiments, the exhaust plug 58 is connected to a fixed portion 88, over which the exhaust plug 58 moves between the first position and the second position.

The movement of the exhaust plug 58 may be driven by one or more actuators 90 connecting the fixed portion 88 to the exhaust plug 58. In some embodiments, the one or more actuators 90 are pneumatically or electrically driven actuators, to withstand the high temperatures of the exhaust section 78 of the gas turbine engine 10.

In some embodiments, the movement of the exhaust plug 58 from the first position to the second position increases the cross-sectional area of the exhaust pathway 80 by up to 20%, in some embodiments in the range of 10% to 20%. A 20% area increase may reduce reverse thrust requirements by a corresponding 20% relative to operation of the thrust reverser 68 with the exhaust plug 58 at the first position.

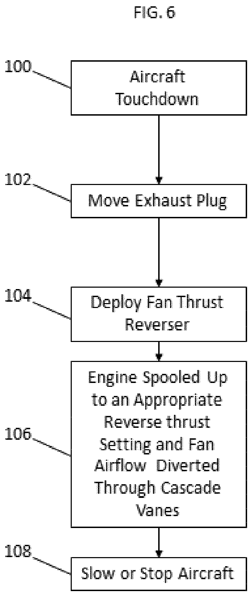

FIG. 6 illustrates a method of a landing sequence for an aircraft. When the aircraft touches down at block 100, the exhaust plug 58 is moved from the first position to the second position at block 102, thus increasing the cross-sectional area of the exhaust pathway 80. At block 104, the translating sleeve 72 of the fan thrust reverser 68 is translated, thus extending the blocker door assemblies 76 across the fan flowpath B, so that when the gas turbine engine 10 is spooled up to an appropriate reverse thrust setting, the fan airflow 70 is diverted through the cascade vanes 74 at block 106, to slow or stop the aircraft at block 108. The steps represented at block 102 and at block 104 may be interchanged in sequencing or happen simultaneously.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An exhaust section (78) of a gas turbine engine, comprising:
an exhaust plug (58); and
an exhaust nozzle (60) radially offset from the exhaust plug defining an exhaust pathway (80) between the exhaust plug and the exhaust nozzle;
wherein the exhaust plug is configured for axial translation relative to exhaust nozzle between a first position and a second position to selectably change a cross-sectional area of the exhaust pathway during thrust reversal operation to reduce an amount of reverse thrust necessary.

2. The exhaust section of claim 1, wherein the exhaust plug includes an end portion (84) tapering to a plug tip (86).

3. The exhaust section of claim 2, wherein the end portion is conical.

4. The exhaust section of claim 2 or 3, further comprising an axially-extending portion (82) of the exhaust plug extending from the end portion.

5. The exhaust section of claim 4, wherein the axially-extending portion is cylindrical.

6. The exhaust portion of any preceding claim, wherein a plurality of actuators (90) drive axial translation of the exhaust plug.

7. The exhaust portion of claim 6, wherein the plurality of actuators are a plurality of pneumatic or electric actuators.

8. The exhaust portion of any preceding claim, wherein translation of the exhaust plug between the first position and the second position changes the cross-sectional area of the exhaust pathway by between 10% and 20%.

9. A gas turbine engine (20), comprising:
a fan section (22) defining a fan airflow pathway;
a combustor section (26);
a turbine section (28) in fluid communication with the combustor section; and
an exhaust section (78) in fluid communication with the turbine section, the exhaust section comprising the features of any preceding claim.

10. A method of operating a gas turbine engine, comprising:
actuating a fan thrust reverser (68) to divert a fan airflow (70) from a fan airflow pathway; and
translating an exhaust plug (58) from a first position to a second position, thereby increasing a cross-sectional area of an exhaust pathway (80) to reduce an amount of reverse thrust necessary.

11. The method of claim 10, wherein increasing the cross-sectional area of the exhaust pathway reduces a core thrust produced by the gas turbine engine.

12. The method of claim 10 or 11, further comprising slowing or stopping an aircraft via the actuating the fan thrust reverser and translating the exhaust plug.

13. The method of claims 10 to 12, wherein translating the exhaust plug from the first position to the second position increases the cross-sectional area of the exhaust pathway between 10% and 20%.
